# EUROPÄISCHE PATENTSCHRIFT

(11) **EP 2 819 879 B1**
(45) Veröffentlichungstag und Bekanntmachung des Hinweises auf die Patenterteilung: **26.07.2017**
(21) Anmeldenummer: 13706976.1
(22) Anmeldetag: 26.02.2013
(51) Int. Cl.: B60M 1/30

(54) **ISOLATIONSTRÄGER FÜR EINE STROMSCHIENE FÜR ELEKTRISCH GETRIEBENE SCHIENENFAHRZEUGE**
INSULATED MOUNT FOR A POWER RAIL FOR ELECTRICALLY DRIVEN RAIL VEHICLES
SUPPORT ISOLANT POUR UN RAIL CONDUCTEUR POUR DES VÉHICULES FERROVIAIRES À ENTRAÎNEMENT ÉLECTRIQUE

(30) Priorität: 28.02.2012 DE 102012101620
(43) Veröffentlichungstag der Anmeldung: 07.01.2015
(73) Patentinhaber: SPL Powerlines Austria GmbH & Co. KG, 2120 Wolkersdorf im Weinviertel (AT)
(72) Erfinder: JUKL, Thomas, A-2301 Rutzendorf (AT)
(74) Vertreter: Kotitschke, Ralf Thomas
(86) Internationale Anmeldenummer: PCT/EP2013/053832
(87) Internationale Veröffentlichungsnummer: WO 2013/127802

(56) Entgegenhaltungen:
- DE-B1- 2 458 029
- DE-U1-202005 000 483
- US-A- 3 835 268
- US-A- 5 160 284

## Beschreibung

Die Erfindung betrifft einen Isolationsträger für eine Stromschiene für elektrisch getriebene Schienenfahrzeuge, der ein Fußteil und einen mit dem Fußteil in der Höhe verstellbar befestigbaren Tragarm, der ein Mittelteil und ein mit dem Mittelteil koppelbares und befestigbares Oberteil aufweist, umfasst, wobei der Tragarm zur Aufnahme der Stromschiene ausgebildet ist.

Üblicherweise dienen Stromschienen als Zuleitung für den elektrischen Strom, um die elektrisch getriebenen Schienenfahrzeuge mit Energie, insbesondere elektrischem Strom zu versorgen. Solche elektrisch getriebenen Schienenfahrzeuge können beispielsweise S-Bahnen, U-Bahnen, Monorails bzw. Einschienenbahnen oder in Werkstatthallen verwendete schienengeführte Stromverbraucher sein.

Im Zusammenhang mit S-Bahnen, U-Bahnen, Einschienenbahnen sind die Stromschienen abhängig von den örtlichen Gegebenheiten an unterschiedlichen Stellen montiert. Beispielswiese können die Stromschienen seitlich neben den Fahrschienen und in bestimmter Höhe installiert sein. Derartige Stromschienen können aber auch über den Fahrschienen und oberhalb der Schienenfahrzeuge montiert sein. Diesen Fall findet man beispielsweise häufig in Werkstatthallen oder in Tunneln vor.

Üblicherweise erfolgt die Stromzuführung von der Stromschiene zum elektrisch getriebenen Schienenfahrzeug durch an der Stromschiene entlang schleifende Stromabnehmer. Im Falle von beispielsweise U- und S-Bahnen sind derartige schleifende Stromabnehmer bei seitlich neben dem Gleis angeordneten Stromschienen als Stromabnehmerbügel oder Schleifschuhe ausgeführt. Die Rückleitung des Stromes erfolgt bei derartigen Systemen vorzugsweise über die Räder und die Fahrschienen.

Solche Stromschienen werden im Zusammenhang mit elektrisch getriebenen Schienenfahrzeugen häufig als sogenannte "dritte Schiene" bezeichnet und sind ausschließlich zur Stromzuführung und nicht zur Aufnahme etwaiger Gewichtskräfte der Schienenfahrzeuge ausgelegt.

Um einen versehentlichen Kontakt mit den z.T. leicht zugänglichen Stromschienen zu vermeiden, müssen die Stromschienen abgedeckt sein. Diese Abdeckungen sind häufig farblich so gehalten, dass man diese unschwer als Gefahrenabdeckung erkennen kann.

Sog. Isolationsträger werden eingesetzt, um die Stromschienen am jeweiligen Ort stationär zu montieren. Diese Isolationsträger erfüllen darüber hinaus den Zweck, die Stromschiene elektrisch von seiner Umgebung zu isolieren. Bei sehr langen Stromschienen müssen derartige Isolationsträger in regelmäßigen Abständen montiert werden, um ein Durchbiegen der Stromschiene aufgrund seiner Gewichtskraft und der auftretenden dynamischen Kräfte beim Schleifen der Stromabnehmer längs der Stromschiene zu vermeiden. Darüber hinaus wird durch die Isolationsträger ein gleichbleibender Abstand der Stromschiene zum Untergrund sichergestellt.

Ein Beispiel eines Isolationsträgers für eine Stromschiene ist in der Druckschrift EP 0 745 505 B1 gezeigt. Der Isolationsträger weist ein Fußteil und einen mit diesem koppelbaren Tragarm auf, der zur Aufnahme der Stromschiene ausgebildet ist. Die Kopplung zwischen Tragarm und Fußteil erfolgt hier über ein oder mehrere am Tragarm vorgesehene Schwerter, die in entsprechende am oberen freien Ende des Fußteils vorgesehene Nuten eintauchen. Das Fußteil und der Tragarm werden mittels eines Bolzen miteinander gesichert, der in ein Durchgangsloch geschoben wird, das sowohl die Nuten am Fußteil als auch die Schwerter am Tragarm durchdringt.

Ein weiterer Isolationsträger für eine Stromschiene ist in DE 10 2006 001 442 B3 beschrieben. Der Träger weist ein Fußteil und eine zweiteilig ausgebildete Halterung für die Stromschiene auf, die in der Höhe verstellbar mit dem Fußteil über eine Schraubverbindung befestigt werden kann. Die beiden Teile der Halterung sind über eine weitere Schraubverbindung miteinander verbunden.

Weitere Isolationsträger sind in den Druckschriften DE 88 06 387 U1, EP 0 543 098 B1, DE 296 12 599 U1 und DE 94 15 876 U beschrieben. Die DE 2458029 B beschreibt einen Isolationsträger, der dem Oberbegriff des Anspruchs 1 entspricht. Nachteilig an den meisten aus dem Stand der Technik bekannten Isolationsträgern ist, dass die Höhe des Tragarms bzw. derjenigen Komponente des Isolationsträgers, die zur Aufnahme der Stromschiene ausgebildet ist, an die meist durch ortsspezifische Kriterien festgelegte Höhe der Stromschiene nicht ohne größeren Aufwand angepasst werden kann. Ist der Tragarm bzw. die Halterung mit dem Fußteil höhenverstellbar, wie dies beispielsweise bei dem in DE 10 2006 001 442 B3 beschriebenen Isolationsträger der Fall ist, ist die Montage des Isolationsträgers aufgrund der Vielzahl von Schraubverbindungen sehr aufwendig, was bei langen Schienennetzen zu deutlich erhöhten Installationskosten führt. Ein weiterer Nachteil kann darin gesehen werden, dass das Anbringen einer Abdeckung für die Stromschiene separat von der Installation der Isolationsträger erfolgt, was wiederum mit einem erhöhten Arbeitsaufwand und somit höheren Installationskosten verbunden ist.

Es ist daher eine Aufgabe der vorliegenden Erfindung, einen Isolationsträger vorzusehen, der die vorgenannten Nachteile nicht hat. Insbesondere soll durch die Erfindung ein Isolationsträger für eine Stromschiene für elektrisch getriebene Schienenfahrzeuge vorgesehen werden, dessen Montage mit der Stromschiene vereinfacht und dessen Wartungsaufwand verringert ist.

Diese Aufgabe wird durch den im Patentanspruch 1 angegebenen Isolationsträger gelöst. Vorteilhafte Ausgestaltungen und Weiterbildungen der Erfindung ergeben sich aus den abhängigen Ansprüchen.

Der erfindungsgemäße Isolationsträger für eine Stromschiene für elektrisch getriebene Schienenfahrzeuge umfasst ein Fußteil und einen mit dem Fußteil in der Höhe verstellbar befestigbaren Tragarm, der ein Mittelteil und ein mit dem Mittelteil koppelbares und befestigbares Oberteil aufweist, wobei der Tragarm zur Aufnahme der Stromschiene ausgebildet ist. Gekennzeichnet ist der erfindungsgemäße Isolationsträger dadurch, dass das Fußteil, das Mittelteil und das Oberteil durch lediglich ein Befestigungsmittel miteinander befestigbar sind.

Die erfindungsgemäße Stromschiene kann in vorteilhafter Weise derart weitergebildet werden, dass das Fußteil und/oder das Mittelteil ein Langloch aufweist, das die höhenverstellbare Befestigung des Fußteils mit dem Tragarm ermöglicht.

Nach einer weiteren bevorzugten Ausgestaltung weist das Fußteil und das Mittelteil jeweils planare Flächen auf, die im befestigten Zustand zueinander in Anlage kommen.

Vorzugsweise weist die planare Fläche des Fußteils und/oder die planare Fläche des Mittelteils das Langloch auf.

Eine bevorzugte Ausführungsform des Isolationsträgers sieht vor, dass das Mittelteil und das Oberteil Gleitelemente aufweisen, die zur Anlage mit der aufzunehmenden Stromschiene ausgebildet sind.

Weiterhin bevorzugt sind das Mittelteil und das Oberteil formschlüssig und/oder kraftschlüssig miteinander koppelbar.

Nach einer weiteren bevorzugten Ausgestaltung verhindert der Formschluss eine Relativbewegung des Mittelteils und des Oberteils in drei Richtungen.

Vorzugsweise sind zwei der drei Richtungen zueinander entgegengesetzt.

Eine weitere bevorzugte Ausführungsform des Isolationsträgers sieht vor, dass an einem Flächenpaar, das den Formschluss in einer Richtung gewährleistet, eine Führungseinrichtung vorgesehen ist zur Führung des Oberteils relativ zum Mittelteil in einer Richtung senkrecht zur Längserstreckung der aufzunehmenden Stromschiene.

Bevorzugt erfolgt der Kraftschluss mittels Presspassung des Oberteils in das Mittelteil.

Vorzugsweise befestigt das Befestigungsmittel das Oberteil kraftschlüssig mit dem Mittelteil und dem Fußteil.

Eine weitere bevorzugte Ausführungsform des Isolationsträgers sieht vor, dass eine Seitenfläche des Oberteils, die dem Mittelteil und dem Fußteil zugewandt ist, ein Sackloch aufweist.

Weiterhin bevorzugt umgreift das Oberteil die aufzunehmende Stromschiene nach drei Seiten.

Ebenso vorzugsweise ist das Fußteil aus einem nicht elektrisch leitfähigem Kunststoff, vorzugsweise aus einem glasfaserverstärktem Kunststoff, oder aus einem Metall, vorzugsweise Stahl hergestellt.

Ein bevorzugtes Ausführungsbeispiel der Erfindung wird nachfolgend anhand der beigefügten Figuren beispielhaft erläutert.

Es zeigen:
Fig. 1 eine perspektivische Darstellung eines Fußteils des Isolationsträgers;
Fig. 2 eine perspektivische Darstellung eines Mittelteils des Isolationsträgers;
Fig. 3 eine perspektivische Darstellung eines Oberteils des Isolationsträgers;
Fig. 4 eine Explosionsansicht des Isolationsträgers; und
Fig. 5 eine Querschnittsansicht des zusammengesetzten Isolationsträgers mit darin aufgenommener Stromschiene.

Die Merkmale des nachstehend beschriebenen und in den Figuren gezeigten Isolationsträgers bzw. dessen Komponenten werden in Bezug auf verschiedene Richtungen beschrieben. So bezieht sich die Angabe "Länge" auf die Erstreckung des Isolationsträgers in Längsrichtung der von dem Isolationsträger aufzunehmenden Stromschiene. Die Angabe "Breite" betrifft die Erstreckung senkrecht zur "Länge", und beide Angaben "Länge" und "Breite" definieren eine horizontale Ebene. Die Angabe "Höhe" bezieht sich auf die Erstreckung des Isolationsträgers in vertikaler Richtung, d.h. senkrecht zu der von den Angaben "Länge" und "Breite" definierten horizontalen Ebene.

Die Angabe "innenseitig" betrifft die Seite eines Bauteils des Isolationsträgers, die der Stromschiene abgewandt ist, während die Angabe "außenseitig" die Seite betrifft, die der Stromschiene zugewandt ist.

Die Festlegung dieser Bedeutung der Angaben "Länge", "Breite" und "Höhe" erscheint besonders hilfreich für den Fall, dass der Isolationsträger am Boden und im Bereich der Schienen, auf denen elektrisch getriebene Schienenfahrzeuge bewegt werden, installiert wird. Die nachstehende Beschreibung und die gewählten Begriffe beziehen sich auf eine Bodenmontage.

Bei der Montage des Isolationsträgers an einer Wand oder einer Decke verändert sich die Bedeutung der Angaben entsprechend.

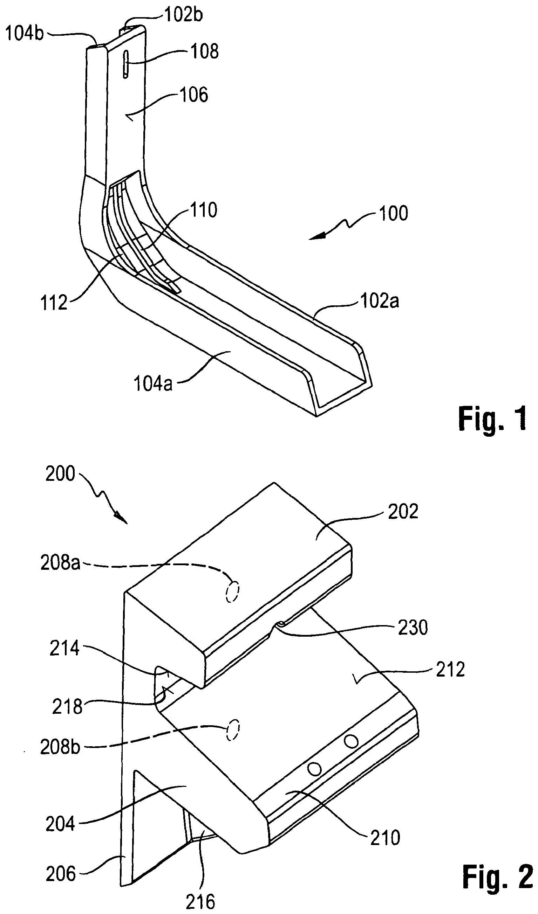

Fig. 1 zeigt eine perspektivische Ansicht eines Fußteils 100 des Isolationsträgers. Das Fußteil ist im Wesentlichen als U-Profil ausgebildet. Bodenseitig verlaufen die seitlichen Flanken 102a, 104a des U-Profils im Wesentlichen horizontal. Nach der Beugung bzw. Krümmung erstrecken sich die Flanken 102b, 104b im Wesentlichen in vertikaler Richtung. Wie der Fig. 1 zu entnehmen ist, ist das horizontal verlaufende U-Profil gegengleich zum vertikal verlaufenden U-Profil ausgebildet. Mit anderen Worten, das horizontal verlaufende U-Profil ist so ausgebildet, dass es eine planare Auflagefläche (Grundplatte) aufweist, die im montierten Zustand vorzugsweise auf einer nicht dargestellten Schienenschwelle aufliegt, während der vertikal verlaufende Bereich eine planare Fläche 106 ausbildet, die in Anlage zu dem in Fig. 2 gezeigten Mittelteil 200, insbesondere der innenseitigen planaren Fläche der Rückwand 206 gebracht wird.

Im Bereich der Krümmung des U-Profils sind innerhalb des U-Profils Rippen 110, 112 vorgesehen, die zusätzlich zu den Flanken 102a, 104a, 102 b, 104b zur Biege- und Torsionssteifigkeit des gesamten Fußteils 100 beitragen, um die bei bestimmungsgemäßen Gebrauch des Isolationsträgers auftretenden statischen und dynamischen Kräfte aufnehmen zu können.

Des Weiteren kann im Bereich der Krümmung des U-Profils eine Durchgangsbohrung (nicht gezeigt) vorgesehen sein, die bei fallendem Wasserniederschlag der Entwässerung des U-Profils dient.

Wenngleich in Fig. 1 nicht dargestellt, weist der horizontal verlaufende Bereich des U-Profils im Bereich seines freien Endes ein Lochbild auf, das bezüglich Anzahl und Größe variabel gestaltet sein kann, um das Fußteil an der Schienenschwelle befestigen zu können. Abhängig von ortstypischen Anforderungen kann das Lochbild oder sogar dieser Bereich des U-Profils anders ausgestaltet sein. Ebenso nicht dargestellt in Fig. 1 ist eine Druckplatte, die bodenseitig auf die Grundplatte befestigt wird, um bei der Montage des Fußteils 100 an einer Schienenschwelle das sehr hohe Anzugsmoment der Schwellenschrauben und Schwellenmuttern möglichst großflächig auf die Druckplatte zu übertragen.

Der vertikal verlaufende Bereich des U-Profils weist im Bereich seines freien Endes ein Langloch 108 auf, das zur Befestigung des Fußteils 100 mit dem in Fig. 1 nicht dargestellten Mittelteil 200 und dem Oberteil 300 dient. Das Lochbild in diesem Bereich kann ebenso bezüglich Anzahl und Größe der Bohrungen und Langlöcher variabel gestaltet werden.

Das Fußteil ist vorzugsweise aus einem elektrisch nicht-leitfähigen Kunststoff, insbesondere einem glasfaserverstärkten Kunststoff hergestellt. Alternativ kann es aber auch aus einem metallischen Werkstoff, beispielsweise Stahl hergestellt sein. Demzufolge ließe sich der Isolationsträger, dessen Bestandteil das Fußteil 100 ist, auch als Mehrzweckisolator bezeichnen.

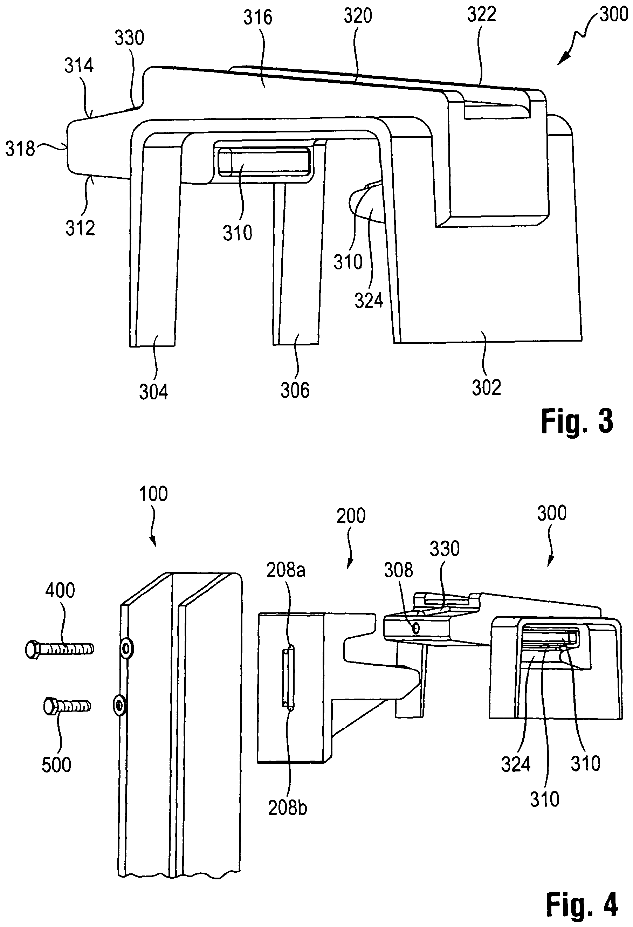

Fig. 2 zeigt in perspektivischer Darstellung ein Mittelteil 200 des Isolationsträgers. Das Mittelteil weist eine Rückwand 206 auf, dessen innenseitige planare Fläche bei der Montage des Isolationsträgers in Anlage mit der planaren Fläche 106 des Fußteils 100 gebracht wird. In der Rückwand 206 ist ein vertikal verlaufende Nut 208 vorgesehen (Fig. 4), an deren oberem Ende eine Durchgangsbohrung 208a und an deren unterem Ende eine Sackloch 208b vorgesehen ist. In das Sackloch 208b ist eine Hülse mit Innengewinde eingesetzt. Alternativ kann das Sackloch 208b selbst ein Innengewinde aufweisen. Die Durchgangsbohrung 208a ist vorzugsweise ohne Innengewinde ausgebildet. Denkbar ist aber auch, dass in die Durchgangsbohrung 208a eine Hülse mit Innengewinde eingesetzt ist, oder alternativ in die Durchgangsbohrung 208a selbst ein Innengewinde geschnitten ist.

Rechtwinklig zu der Rückwand 206 verläuft eine obere Backe 202, die sich in Richtung des in Fig. 2 nicht dargestellten Oberteils 300 (Fig. 3) erstreckt. Etwa auf halber Höhe der vertikal verlaufenden Rückwand 206 erstreckt sich ebenfalls zum Oberteil 300 hin eine untere Backe 204, an deren außenseitigem Endabschnitt und oberseitig ein Gleitelement 210 eingesteckt, alternativ mittels einer Schraubverbindung befestigt ist. Die untere Backe 204 überragt in Breitenrichtung nach außen die obere Backe 202.

Das Gleitelement 210 ist in Fig. 2 nicht dargestellt, und in Fig. 4 nur ansatzweise als kleine Erhebung erkennbar. Das Gleitelement 210 entspricht allerdings seiner Funktion und Konstruktion nach den Gleitelementen 310, die im Zusammenhang mit dem Oberteil 300 (Fig. 3) beschrieben werden.

Die diagonal von der Rückwand 206 zur unteren Seite der Backe 204 hin verlaufende Rippe 216 trägt zur Stabilität des Mittelteils 200 bei.

An der Unterseite der oberen Backe 202 ist eine halbzylinderförmige Nut 230 vorgesehen, die entsprechend der halbzylinderförmigen Feder 308 des Oberteils 300 (Fig. 3) ausgebildet ist.

Die Fläche 212 auf der Oberseite der unteren Backe 204 und die Fläche 214 auf der Unterseite der oberen Backe 202 verlaufen trapezförmig, d.h. winklig zueinander und bilden so eine keilförmige Ausnehmung.

Das Mittelteil 200 ist aus einem elektrisch nicht leitfähigen Kunststoff, vorzugsweise einem glasfaserverstärkten Kunststoff hergestellt.

Das in Fig. 3 in perspektivischer Darstellung gezeigte Oberteil 300 ist im Wesentlichen U-förmig ausgebildet. Die beiden sich in vertikaler Richtung erstreckenden Arme 304, 306 umschließen innenseitig die darin aufzunehmende (nicht gezeigte) Stromschiene, während die Seitenwand 302 die Stromschiene außenseitig abdeckt. Die Seitenwand 302 erstreckt sich über die gesamte Länge des Oberteils 300. Die Arme 304, 306 können als nahezu rechtwinklig gekrümmter Fortsatz der Seitenwand 302 angesehen werden.

Zwischen den Armen 304, 306 ist oberseitig eine Platte 316 vorgesehen, die zum Mittelteil 200 hin schnabelförmig bzw. keilförmig ausgebildet ist (Fig. 4). Die Platte 316 umfasst zwei auf der Oberseite der Platte 316 hervorstehende und in Breitenrichtung geringfügig schräg verlaufende Vorsprünge 320, 322, die sich mit Ausnahme des schnabelförmigen innenseitigen Endabschnitts über die gesamte Breite der Platte 316 erstrecken. Die Platte 316 umgreift teilweise außenseitig die Seitenwand 302.

Der schnabelförmige innenseitige Endabschnitt der Platte 316 wird durch die untere, im Wesentlichen horizontal verlaufende Fläche 312, die geneigte Fläche 314 und die dazwischen im Wesentlichen vertikal verlaufende Fläche 318 festgelegt. Der trapezförmige bzw. keilförmige Schnabel ist in Breitenrichtung gesehen innenseitig von den Armen 304, 306 angeordnet.

Auf der Fläche 314 ist die bereits im Zusammenhang mit der Fig. 2 erwähnte halbzylinderförmige Feder 330 (Fig. 4) vorgesehen, die sich im Wesentlichen über die gesamte Breite der Fläche 314 erstreckt.

An der Fläche 318 ist ein Sackloch 308 vorgesehen, dessen Funktion im Zusammenhang mit der Fig. 4 beschrieben wird. In das Sackloch 308 ist eine Hülse mit Innengewinde eingesetzt. Alternativ kann das Sackloch 308 selbst mit einem Innengewinde versehen sein.

An der Innenseite der Seitenwand 302 (Fig. 4) ist eine nahezu rechtwinklig ausgebildete, mittig an der Seitenwand 302 angeordnete Auflage 324 vorgesehen, an der wiederum Gleitelemente 310 eingesteckt, alternativ mittels einer Schraubbefestigung befestigt sind. In Längsrichtung überragt die Seitenwand 302 die Auflage 324 und die Gleitelemente 310.

Fig. 4 zeigt eine Explosionsansicht des oberen Bereichs des Isolationsträgers. Beim Zusammenbau des Isolationsträgers wird ein Schraubenbolzen 500 durch das im vertikal verlaufenden Bereich des Fußteils 100 vorgesehene Langloch 108 hindurch geführt und in das untere Sackloch 208b im Mittelteil 200 geschraubt. Anschließend wird die Feder 330 in die an der Fläche 214 des Mittelteils 200 vorgesehene Nut 230 geführt und danach das Oberteil 300 formschlüssig mit dem Mittelteil 200 verbunden. Dabei bildet das Flächenpaar 214, 314, das Flächenpaar 218, 318 und das Flächenpaar 312, 212 einen Formschluss, der eine Relativbewegung des Oberteils 300 und des Mittelteils 200 in drei Richtungen (nach oben, nach unten sowie nach innen, d.h. zum Fußteil 100 hin) verhindert.

Zusätzlich oder alternativ kann das Oberteil 300 mit seinem schnabelförmigen innenseitigen Endabschnitt auch zwischen den Backen 202, 204 des Mittelteils 200 mittels Presspassung fixiert werden.

Im Anschluss wird ein Schraubenbolzen 400 ebenso durch das Langloch 108 im Fußteil 100 geführt, durch die obere Durchgangsbohrung 208a im Mittelteil bewegt und anschließend in das Sackloch 308 des Oberteils 300 geschraubt. Der zuvor eingeschraubte Schraubenbolzen 500 verhindert dabei eine Verdrehung des Mittelteils 200 und des Oberteils 300 relativ zum Fußteil 100.

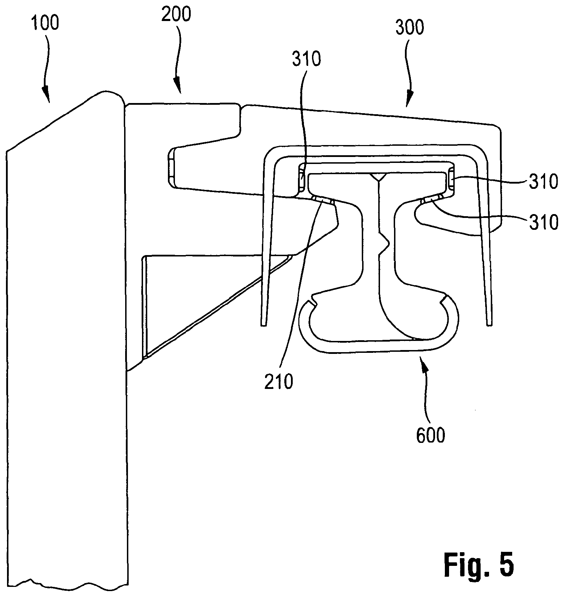

Wie in Fig. 5 zu erkennen ist, kommt die Stromschiene im montierten Zustand des Isolationsträgers zumindest teilweise in Anlage mit den Gleitelementen 310 des Oberteils 300 und den Gleitelementen 210 des Mittelteils 200.

Der voranstehend beschriebene Isolationsträger bietet mehrere Vorteile gegenüber den Isolationsträgern, die aus dem Stand der Technik bekannt sind.

Das Mittelteil 200 und das damit formschlüssig (und evtl. zusätzlich über eine Presspassung) verbundene Oberteil 300 können nach Bedarf in unterschiedlicher Höhe am Fußteil 100 befestigt werden. Somit kann der Isolationsträger mühelos und schnell an in unterschiedlichen Höhen angeordnete Stromschienen angepasst werden. Für den Hersteller des Isolationsträgers verringern sich dadurch die Herstellungskosten, da die gleiche Art von Isolationsträger in unterschiedlichen Umgebungen eingesetzt werden kann.

Ein weiterer Vorteil besteht darin, dass zur Verbindung des Oberteils 300 und des Mittelteils 200 mit dem Fußteil 100 lediglich ein Befestigungsmittel 400, im gezeigten Ausführungsbeispiel ein Schraubenbolzen, erforderlich ist. Dies verringert den Installations- und Wartungsaufwand erheblich und senkt die Kosten. Der im Ausführungsbeispiel gezeigte Schraubenbolzen 500 ist nicht unbedingt notwendig, aber vorteilhaft, da er die Montage zusätzlich erleichtert, weil er beim Einsetzen des Schraubenbolzens 400 eine Verdrehung des Mittelteils 200 relativ zum Fußteil 100 verhindert.

Um einen versehentlichen Kontakt mit der Stromschiene zu verhindern, muss die Stromschiene über ihre gesamte Länge abgedeckt sein, d.h. auch in den Bereichen zwischen zwei benachbarten Isolationsträgern. Solche aus dem Stand der Technik bekannten Abdeckungen können mit dem hier beschriebenen Isolationsträger mühelos verwendet werden. Da das Oberteil 300 mit seinen in Längsrichtung abstehenden Seitenarmen 304 und 306 und seiner Seitenwand 302 bereits ein integrierter Bestandteil des Isolationsträgers ist, ist die Befestigung der Abdeckung sehr einfach, da sie lediglich unterhalb des Oberteils 300, d.h. zwischen der Stromschiene und der Seitenwand 302 einerseits und den gekrümmt ausgebildeten Armen 304, 306 andererseits eingeschoben werden muss. Eine zusätzliche Arretierung der Abdeckung mit der Stromschiene ist nicht erforderlich, da die Abdeckung bereits durch die Arme 304, 306 und die Seitenwand 302 fest fixiert ist. Dadurch verringert sich die Anzahl der für einen funktionsfähigen und gesetzlich zugelassenen Isolationsträger erforderlichen Bauteile, was sich nicht nur positiv auf die Herstellungskosten, sondern auch auf den Wartungsaufwand des Isolationsträgers auswirkt.

Sämtliche Gleitelemente 210, 310, die in Kontakt mit der Stromschiene kommen können, sind ausschließlich am Mittelteil 200 und am Oberteil 300 angeordnet. Mit anderen Worten, das Fußteil 100 kann unter keinen Umständen in Kontakt mit der Stromschiene kommen. Aus diesem Grund kann das Fußteil 100 auch aus einem elektrisch leitfähigen Material, beispielsweise aus einem Metall, insbesondere Stahl hergestellt sein.

## Patentansprüche

1. Isolationsträger für eine Stromschiene für elektrisch getriebene Schienenfahrzeuge, umfassend ein Fußteil (100) und einen mit dem Fußteil (100) in der Höhe verstellbar befestigbaren Tragarm (200, 300), der ein Mittelteil (200) und ein mit dem Mittelteil (200) koppelbares und befestigbares Oberteil (300) aufweist, wobei der Tragarm (200, 300) zur Aufnahme der Stromschiene ausgebildet ist, **dadurch gekennzeichnet, dass** das Fußteil (100), das Mittelteil (200) und das Oberteil (300) durch lediglich ein Befestigungsmittel (400) miteinander befestigbar sind.

2. Isolationsträger nach Anspruch 1, **dadurch gekennzeichnet, dass** das Fußteil (100) und/oder das Mittelteil (200) ein Langloch (108) aufweist, das die höhenverstellbare Befestigung des Fußteils (100) mit dem Tragarm (200, 300) ermöglicht.

3. Isolationsträger nach Anspruch 1 oder 2, **dadurch gekennzeichnet, dass** das Fußteil (100) und das Mittelteil (200) jeweils planare Flächen (106, 206) aufweisen, die im befestigten Zustand zueinander in Anlage kommen.

4. Isolationsträger nach den Ansprüchen 2 und 3, **dadurch gekennzeichnet, dass** die planare Fläche (106) des Fußteils (100) und/oder die planare Fläche (206) des Mittelteils (200) das Langloch (108) aufweist.

5. Isolationsträger nach einem der vorhergehenden Ansprüche, **dadurch gekennzeichnet, dass** das Mittelteil (200) und das Oberteil (300) Gleitelemente (210, 310) aufweisen, die zur Anlage mit der aufzunehmenden Stromschiene ausgebildet sind.

6. Isolationsträger nach einem der vorhergehenden Ansprüche, **dadurch gekennzeichnet, dass** das Mittelteil (200) und das Oberteil (300) formschlüssig und/oder kraftschlüssig miteinander koppelbar sind.

7. Isolationsträger nach Anspruch 6, **dadurch gekennzeichnet, dass** der Formschluss eine Relativbewegung des Mittelteils (200) und des Oberteils (300) in drei Richtungen verhindert.

8. Isolationsträger nach Anspruch 7, **dadurch gekennzeichnet, dass** zwei der drei Richtungen zueinander entgegengesetzt sind.

9. Isolationsträger nach einem der Ansprüche 6 bis 8, **dadurch gekennzeichnet, dass** an einem Flächenpaar (214, 314), das den Formschluss in einer Richtung gewährleistet, eine Führungseinrichtung (230, 330) vorgesehen ist zur Führung des Oberteils (300) relativ zum Mittelteil (200) in einer Richtung senkrecht zur Längserstreckung der aufzunehmenden Stromschiene.

10. Isolationsträger nach Anspruch 6, **dadurch gekennzeichnet, dass** der Kraftschluss mittels Presspassung des Oberteils (300) in das Mittelteil (200) erfolgt.

11. Isolationsträger nach einem der vorhergehenden Ansprüche, **dadurch gekennzeichnet, dass** das Befestigungsmittel (400) das Oberteil (300) kraftschlüssig mit dem Mittelteil (200) und dem Fußteil (100) befestigt.

12. Isolationsträger nach einem der vorhergehenden Ansprüche, **dadurch gekennzeichnet, dass** eine Seitenfläche (318) des Oberteils (300), die dem Mittelteil (200) und dem Fußteil (100) zugewandt ist, ein Sackloch (308) aufweist.

13. Isolationsträger nach einem der vorhergehenden Ansprüche, **dadurch gekennzeichnet, dass** das Oberteil (300) die aufzunehmende Stromschiene nach drei Seiten umgreift.

14. Isolationsträger nach einem der vorhergehenden Ansprüche, **dadurch gekennzeichnet, dass** das Fußteil (100) aus einem nicht elektrisch leitfähigem Kunststoff, vorzugsweise aus einem glasfaserverstärktem Kunststoff, oder aus einem Metall, vorzugsweise Stahl hergestellt ist.

## Claims

1. An insulated mount for a power rail for electrically driven rail vehicles, comprising a foot part (100) and a support arm that can be fastened adjustable in height to the foot part (100), which comprises a middle part (200) and an upper part (300) that can be coupled and fastened to the middle part (200), wherein the support arm (200, 300) is designed for receiving the power rail, **characterized in that** the foot part (100), the middle part (200) and the upper part (300) can be fastened to one another by merely one fastening means (400).

2. The insulated mount according to Claim 1, **characterized in that** the foot part (100) and/or the middle part (200) comprises an elongated hole (108) which makes possible the height-adjustable fastening of the foot part (100) to the support arm (200, 300).

3. The insulated mount according to Claim 1 or 2, **characterized in that** the foot part (100) and the middle part (200) each comprise planar surfaces (106, 206) which in the fastened state come to lie against one another.

4. The insulated mount according to the Claims 2 and 3, **characterized in that** the planar surface (106) of the foot part (100) and/or the planar surface (206) of the middle part (200) comprises the elongated hole (108).

5. The insulated mount according to any one of the preceding claims, **characterized in that** the middle part (200) and the upper part (300) comprise sliding elements (210, 310), which are designed to lie against the power rail to be received.

6. The insulated mount according to any one of the preceding claims, **characterized in that** the middle part (200) and the upper part (300) can be coupled to one another in a form-fitted and/or force-fitted manner.

7. The insulated mount according to Claim 6, **characterized in that** the form-fit prevents a relative movement of the middle part (200) and of the upper part (300) in three directions.

8. The insulated mount according to Claim 7, **characterized in that** two of the three directions are opposed to one another.

9. The insulated mount according to any one of the Claims 6 to 7, **characterized in that** on a surface pair (214, 314), which ensures the form-fit in one direction, a guiding device (230, 330) is provided for guiding the upper part (300) relative to the middle part (200) in a direction perpendicularly to the longitudinal extent of the power rail to be received.

10. The insulated mount according to Claim 6, **characterized in that** the force-fit takes place by means of press-fitting the upper part (300) into the middle part (200).

11. The insulated mount according to any one of the preceding claims, **characterized in that** the fastening means (400) fastens the upper part (300) to the middle part (200) and the foot part (100) in a force-fit manner.

12. The insulated mount according to any one of the preceding claims, **characterized in that** a lateral surface (318) of the upper part (300), which faces the middle part (200) and the foot part (100), comprises a blind hole (308).

13. The insulated mount according to any one of the preceding claims, **characterized in that** the upper part (300) engages about the power rail to be received on three sides.

14. The insulated mount according to any one of the preceding claims, **characterized in that** the foot part (100) is produced from a non-electrically conductive plastic, preferentially from a glass fibre-reinforced plastic, or a metal, preferentially steel.

## Revendications

1. Support isolant pour un rail conducteur pour des véhicules ferroviaires entraînés de manière électrique, comprenant une partie de piètement (100) et un bras porteur (200, 300) pouvant être fixé de manière ajustable en hauteur à la partie de piètement (100), lequel bras porteur présente une partie centrale (200) et une partie supérieure (300) pouvant être couplée et fixée à la partie centrale (200), dans lequel le bras porteur (200, 300) est réalisé afin de recevoir le rail conducteur, **caractérisé en ce que** la partie de piètement (100), la partie centrale (200) et la partie supérieure (300) peuvent être fixées les unes aux autres par seulement un moyen de fixation (400).

2. Support isolant selon la revendication 1, **caractérisé en ce que** la partie de piètement (100) et/ou la partie centrale (200) présentent un trou oblong (108), qui permet la fixation ajustable en hauteur de la partie de piètement (100) au bras porteur (200, 300).

3. Support isolant selon la revendication 1 ou 2, **caractérisé en ce que** la partie de piètement (100) et la partie centrale (200) présentent respectivement des surfaces (106, 206) planes, qui viennent en appui les unes par rapport aux autres dans l'état fixé.

4. Support isolant selon les revendications 2 et 3, **caractérisé en ce que** la surface (106) plane de la partie de piètement (100) et/ou la surface (206) plane de la partie centrale (200) présentent le trou oblong (108).

5. Support isolant selon l'une quelconque des revendications précédentes, **caractérisé en ce que** la partie centrale (200) et la partie supérieure (300) présentent des éléments coulissants (210, 310), qui sont réalisés pour venir en appui avec le rail conducteur à recevoir.

6. Support isolant selon l'une quelconque des revendications précédentes, **caractérisé en ce que** la partie centrale (200) et la partie supérieure (300) peuvent être couplées l'une à l'autre par complémentarité de forme et/ou à force.

7. Support isolant selon la revendication 6, **caractérisé en ce que** la complémentarité de forme empêche un déplacement relatif de la partie centrale (200) et de la partie supérieure (300) dans trois directions.

8. Support isolant selon la revendication 7, **caractérisé en ce que** deux des trois directions sont opposées l'une à l'autre.

9. Support isolant selon l'une quelconque des revendications 6 à 8, **caractérisé en ce qu'**est prévu, au niveau d'une paire de surfaces (214, 314), qui garantit la complémentarité de forme dans une direction, un dispositif de guidage (230, 330) servant à guider la partie supérieure (300) par rapport à la partie centrale (200) dans une direction de manière perpendiculaire par rapport à l'extension longitudinale du rail conducteur à recevoir.

10. Support isolant selon la revendication 6, **caractérisé en ce que** la liaison à force est réalisée au moyen d'un ajustement serré de la partie supérieure (300) dans la partie centrale (200).

11. Support isolant selon l'une quelconque des revendications précédentes, **caractérisé en ce que** le moyen de fixation (400) fixe la partie supérieure (300) à force à la partie centrale (200) et la partie de piètement (100).

12. Support isolant selon l'une quelconque des revendications précédentes, **caractérisé en ce qu'**une surface latérale (318) de la partie supérieure (300), qui est tournée vers la partie centrale (200) et la partie de piètement (100), présente un trou borgne (308).

13. Support isolant selon l'une quelconque des revendications précédentes, **caractérisé en ce que** la partie supérieure (300) entoure par trois côtés le rail conducteur à recevoir.

14. Support isolant selon l'une quelconque des revendications précédentes, **caractérisé en ce que** la partie de piètement (100) est fabriquée à partir d'une matière plastique non électroconductrice, de préférence à partir d'une matière plastique renforcée par des fibres de verre, ou à partir d'un métal, de préférence à partir d'acier.
